# EUROPEAN PATENT SPECIFICATION

(11) **EP 3 772 430 B1**
(45) Date of publication and mention of the grant of the patent: **22.06.2022**
(21) Application number: 20187150.6
(22) Date of filing: 22.07.2020
(51) Int. Cl.: B60N 2/30, B60N 3/00

(54) **A SEAT FOR A VEHICLE**
SITZ FÜR EIN FAHRZEUG
SIÈGE POUR VÉHICULE

(30) Priority: 09.08.2019 GB 201911396
(43) Date of publication of application: 10.02.2021
(73) Proprietor: Ford Global Technologies, LLC, Dearborn, MI 48126 (US)
(72) Inventor: JACKSON, Daniel T., Basildon, Essex SS15 4EN (GB); NEUGEBAUER, James, Chelmsford, Essex CM2 8NH (GB); WRIGHT, Ian, Sutherland, Chelmsford, Essex CM1 2PR (GB); MURRAY, James, Nicholas, Chelmsford, Essex CM1 2NX (GB)
(74) Representative: Haseltine Lake Kempner LLP

(56) References cited:
- WO-A1-2011/154638
- DE-A1-102005 025 544
- FR-A1- 3 008 935
- GB-A- 2 395 118
- JP-A- H05 221 256

## Description

### Technical Field

This disclosure relates generally to a seat for a vehicle and particularly, although not exclusively, relates to a seat back with a protruding portion that protrudes below a pivot point of the seat and provides a table surface when the seat back is rotated.

### Background

Utility vehicles have to perform various functions, one of which is as a mobile office. However, the interior of utility vehicles is often not suitable for carrying out paperwork.

GB2395118A, JPH05221256A, DE102005025544A1, WO2011/154638A1 and FR3008935A1 disclose previous vehicle seat arrangements.

### Statements of Invention

According to an aspect of the present disclosure, there is provided a vehicle (such as a motor vehicle) comprising a seat, the seat comprising:
a seat base portion;
a seat back portion rotatable with respect to the seat base portion between a first position, in which the seat back portion is substantially upright, and a second position, in which a back surface of the seat back portion is substantially horizontal, and
a projecting portion extending from an edge of the seat back portion that is at a lower end of the seat back portion when in the first position, the projecting portion having a surface that is contiguous with the back surface of the seat back portion, wherein the projecting portion is configured to rotate with the seat back portion such that in the second position the projecting portion extends rearwards of the seat base portion and the back surface of the seat back portion and the surface of the projecting portion together form a table surface,
wherein the seat further comprises at least one selectively extending portion, the extending portion being configured to further extend the table surface,
wherein the vehicle further comprises at least one further seat, the further seat being provided adjacent to the seat such that the seat and further seat are in a row, wherein the extending portion when deployed extends behind the further seat.

The seat back portion may rotate about a pivot point of the seat. When the seat back portion is in the first position, the back surface of the seat back portion may be above the pivot point and the projecting portion may be below the pivot point.

The projecting portion may be rigidly fixed to the seat back portion. Alternatively, the projecting portion may be moveable with respect to the seat back portion, for example, the projecting portion may be retractable into the seat back portion.

The seat back portion may be rotatably coupled to the seat base portion, e.g. at the pivot point of the seat.

The seat may further comprise an intermediate seat back portion provided between the seat back portion and the seat base portion. The seat back portion may be rotatably coupled to the intermediate seat back portion, e.g. at the pivot point of the seat. The intermediate seat back portion may be rotatably coupled to the seat base portion. For example, the intermediate seat back portion and seat back portion may together rotate with respect to the seat base portion.

The or each extending portion may selectively extend from the projecting portion. For example, the or each extending portion may unfold with respect to the projecting portion.

The seat may comprise a pair of extending portions that extend from the projecting portion. The pair of extending portions may extend from respective lateral edges of the projecting portion. For example, the pair of extending portions may rotate about respective lateral edges of the projecting portion and may unfold with respect to the projecting portion.

The seat may further comprise a headrest portion. The headrest portion may be configured to engage a dashboard structure of the vehicle when the seat is in the second position.

The vehicle may further comprise the dashboard structure. The dashboard structure may be configured to receive the headrest portion and hold the seat back portion in place when in the second position.

The vehicle may further comprise a rear seat provided rearwards of the seat. The table surface may be provided for an occupant of the rear seat.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figures 1a and 1b (collectively Figure 1) are schematic side views of a seat for a vehicle according to an example of the present disclosure with Figure 1a showing a seat back in a first position and Figure 1b showing the seat back in a second position; and
Figures 2a and 2b (collectively Figure 2) are schematic top views of a seating arrangement for a vehicle according to an example of the present disclosure with Figure 2a showing a seat back of one of the seats in the first position and Figure 2b showing the seat back in the second position.

### Detailed Description

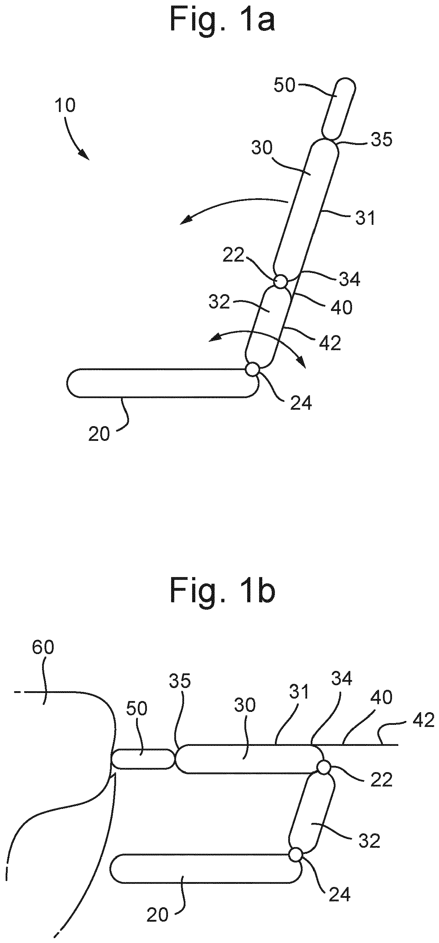

With reference to Figure 1, the present disclosure relates to a seat 10 for a vehicle 100, such as a motor vehicle. The seat 10 comprises a seat base portion 20 and a seat back portion 30. The seat back portion 30 is rotatable with respect to the seat base portion 20. In particular, the seat back portion 30 is rotatable between a first position, in which the seat back portion is substantially upright (depicted in Figure 1a), and a second position, in which a back surface 31 of the seat back portion is substantially horizontal (depicted in Figure 1b). As shown, the seat back portion 30 may be rotatably coupled to the seat base portion 20 at a pivot point 22.

The seat 10 may further comprise an intermediate seat back portion 32 provided between the seat back portion 30 and the seat base portion 20. The intermediate seat back portion 32 and the seat back portion 30 may together form a seat back of the seat 10. The seat back portion 30 may be rotatably coupled to the intermediate seat back portion 32, e.g. at the pivot point 22. The intermediate seat back portion 32 may also be rotatably coupled to the seat base portion 20 about a further pivot point 24. For example, the intermediate seat back portion 32 and seat back portion 30 may together rotate with respect to the seat base portion 20, e.g. to allow adjustment of the seat back recline angle. In another arrangement (not shown), the intermediate seat back portion 32 may be omitted and the seat back portion 30 may directly couple to the seat base portion 20.

The seat 10 further comprises a projecting portion 40. The projecting portion 40 extends from a lower edge 34 of the seat back portion 30. The lower edge 34 is at a lower end of the seat back portion 30 when it is in the first position. The projecting portion 40 is configured to rotate with the seat back portion 30 about pivot point 22. When the seat back portion 30 is in the first position, the back surface 31 of the seat back portion may be above the pivot point 22 and the projecting portion 40 may be below the pivot point 22. By contrast, when the seat back portion 30 is in the second position, the back surface 31 of the seat back portion and the projecting portion 40 may be either side of the pivot point 22 with the projecting portion 40 extending rearwards of the seat base portion 30.

The projecting portion 40 has a surface 42 that is contiguous with the back surface 31 of the seat back portion 30. The projecting portion surface 42 is continuous with the back surface 31. In particular, the projecting portion surface 42 and the back surface 31 may be substantially flat and may lie in substantially the same plane. The back surface 31 of the seat back portion and the surface 42 of the projecting portion 40 together form a table surface when the seat back portion 30 is in the second position.

In the depicted arrangement, the projecting portion 40 is rigidly fixed to the seat back portion 30. However, in another arrangement (not shown), the projecting portion 40 may be moveable with respect to the seat back portion 30. For example, the projecting portion 40 may be retractable into the seat back portion 30. In particular, the projecting portion 40 may retract into the seat back portion 30 when the seat back portion 30 is in the first position and the projecting portion 40 may extend from the seat back portion 30 when the seat back portion 30 is in the second position.

With reference to Figure 1b, the seat 10 may further comprise a headrest portion 50 extending from an upper edge 35 of the seat back portion 30. The headrest portion 50 may engage a dashboard structure 60 of the vehicle when the seat back portion 30 is in the second position. The dashboard structure 60 may be configured to receive the headrest portion 50 and hold the seat back portion 30 in place when it is in the second position. For example, the dashboard structure may comprise a recess or receiving section that receives the headrest portion 50. An interaction with the dashboard structure 60 may resist further rotation of the seat back portion 30 and may help provide a stable table surface.

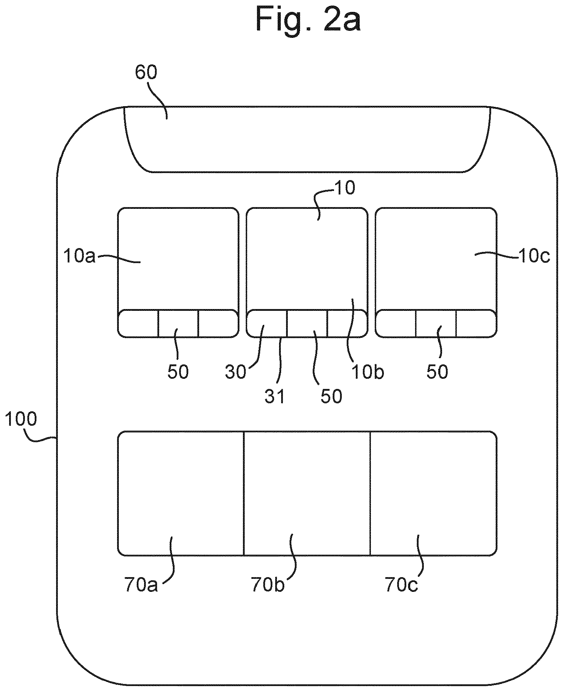

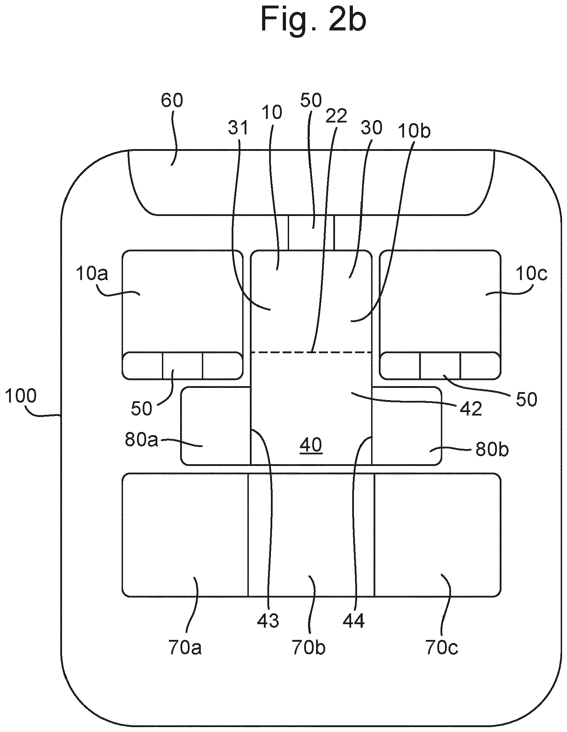

With reference to Figure 2, the seat 10 may be provided in the vehicle 100 as part of a row of seats. In the particular arrangement shown, the seat 10 may be a middle seat 10b in a row of three seats 10a, 10b, 10c. However, it is also envisaged that the seat 10 may be provided in a row of one or more seats.

The vehicle 100 may further comprise one or more rear seats provided behind the seat 10. In the particular arrangement shown, a row of three rear seats 70a, 70b, 70c are provided behind the seat 10. However, it is also envisaged that one or more rear seats may be provided behind seat 10.

The table surface provided by the seat 10 when the seat back portion 30 is in the second position may be used by an occupant of one of the rear seats 70a, 70b, 70c and/or an occupant of one of the front seats 10a, 10c.

The vehicle 100 may comprise the dashboard structure 60. As shown in Figure 2b, the headrest portion of seat 10 may engage (e.g. rest on) the dashboard structure 60 when the seat back portion 30 is in the second position. A locking mechanism (not shown) may be provided to secure the seat back portion 30 in the second position.

As depicted in Figure 2b, the seat 10 may comprise a pair of extending portions 80a, 80b that selectively extend from the projecting portion 40. The pair of extending portions 80a, 80b may extend from respective opposite lateral edges 43, 44 of the projecting portion 40. For example, the pair of extending portions 80a, 80b may rotate about the respective lateral edges 43, 44 of the projecting portion 40 and may unfold with respect to the projecting portion. The extending portions 80a, 80b when deployed may extend behind the other front row seats 10a, 10c.

The extending portions 80a, 80b may fold back onto the projecting portion 40 and may or may not overlap when folded back. A locking mechanism (not shown) may hold the extending portions 80a, 80b in place when extended and/or stowed. The extending portions 80a, 80b and protruding portion 40 may together rotate with the seat back portion 30, e.g. when returning to or moving away from the first position depicted in Figures 1a and 2a.

In other arrangements (not shown), one or more extending portions may be provided. Furthermore, the extending portion(s) may retract, e.g. slide, relative to the protruding portion 40.

The seat 10 of the present disclosure advantageously provides a large table surface for an occupant of the vehicle 100 to use. This may be particularly beneficial when the vehicle is being used as a mobile office.

## Claims

1. A vehicle (100) comprising a seat, the seat (10, 10b) comprising:
a seat base portion (20);
a seat back portion (30) rotatable with respect to the seat base portion (20) between a first position, in which the seat back portion (30) is substantially upright, and a second position, in which a back surface (31) of the seat back portion (30) is substantially horizontal, and
a projecting portion (40) extending from an edge of the seat back portion (30) that is at a lower end of the seat back portion (30) when in the first position, the projecting portion (40) having a surface (42) that is contiguous with the back surface (31) of the seat back portion (30), wherein the projecting portion (40) is configured to rotate with the seat back portion (30) such that in the second position the projecting portion (40) extends rearwards of the seat base portion (20) and the back surface (31) of the seat back portion (30) and the surface (42) of the projecting portion (40) together form a table surface (42),
wherein the seat (10) further comprises at least one selectively extending portion (80a, 80b), the extending portion (80a, 80b) being configured to further extend the table surface (42),
wherein the vehicle (100) further comprises at least one further seat (10a, 10c), the further seat (10a, 10c) being provided adjacent to the seat (10) such that the seat (10) and further seat (10a, 10c) are in a row, **characterised in that** the extending portion (80a, 80b) when deployed extends behind the further seat (10a, 10c).

2. The vehicle (100) of claim 1, wherein the seat back portion (30) rotates about a pivot point (22) of the seat (10) and when the seat back portion (30) is in the first position, the back surface (31) of the seat back portion (30) is above the pivot point (22) and the projecting portion (40) is below the pivot point (22).

3. The vehicle (100) of claim 1 or 2, wherein the projecting portion (40) is rigidly fixed to the seat back portion (30) or the projecting portion (40) is retractable into the seat back portion (30).

4. The vehicle (100) of any of the preceding claims, wherein the seat back portion (30) is rotatably coupled to the seat base portion (20).

5. The vehicle (100) of any of claims 1 to 3, wherein the seat (10) further comprises an intermediate seat back portion (32) provided between the seat back portion (30) and the seat base portion (20), wherein the seat back portion (30) is rotatably coupled to the intermediate seat back portion (32), and wherein the intermediate seat back portion (32) is rotatably coupled to the seat base portion (20).

6. The vehicle (100) of any of the preceding claims, wherein the or each extending portion (80a, 80b) selectively extends from the projecting portion (40).

7. The vehicle (100) of any of the preceding claims, wherein the or each extending portion (80a, 80b) unfolds with respect to the projecting portion (40).

8. The vehicle (100) of any of the preceding claims, wherein the seat (10) comprises a pair of extending portions (80a, 80b) that extend from the projecting portion (40).

9. The vehicle (100) of claim 8, wherein the pair of extending portions (80a, 80b) extend from respective lateral edges of the projecting portion (40).

10. The vehicle (100) of claim 9, wherein the pair of extending portions (80a, 80b) rotate about respective lateral edges of the projecting portion (40) and unfold with respect to the projecting portion (40).

11. The vehicle (100) of any of the preceding claims, wherein the seat (10) further comprises a headrest portion (50), the headrest portion (50) being configured to engage a dashboard structure (60) of the vehicle (100) when the seat (10) is in the second position.

12. The vehicle (100) of any of the preceding claims, wherein the vehicle (100) further comprises a rear seat (70a, 70b, 70c) provided rearwards of the seat (10), the table surface (42) being provided for an occupant of the rear seat.

## Patentansprüche

1. Fahrzeug (100), umfassend einen Sitz, der Sitz (10, 10b) umfassend:
einen Sitzflächenabschnitt (20);
einen Sitzlehnenabschnitt (30), der in Bezug auf den Sitzflächenabschnitt (20) zwischen einer ersten Position, in der der Sitzlehnenabschnitt (30) im Wesentlichen aufrecht ist, und einer zweiten Position, in der eine Rückenfläche (31) des Sitzlehnenabschnitts (30) im Wesentlichen horizontal ist, drehbar ist, und
einen hervorstehenden Abschnitt (40), der sich von einem Rand des Sitzlehnenabschnitts (30) erstreckt, der an einem unteren Ende des Sitzlehnenabschnitts (30) ist, wenn er in der ersten Position ist, wobei der hervorstehende Abschnitt (40) eine Oberfläche (42) aufweist, die angrenzend an die Rückenfläche (31) des Sitzlehnenabschnitts (30) ist, wobei der hervorstehende Abschnitt (40) konfiguriert ist, um mit dem Sitzlehnenabschnitt (30) zu drehen, sodass sich der hervorstehende Abschnitt (40) in der zweiten Position von dem Sitzflächenabschnitt (20) nach hinten erstreckt und die hintere Oberfläche (31) des Sitzlehnenabschnitts (30) und die Oberfläche (42) des hervorstehenden Abschnitts (40) zusammen eine Tischoberfläche (42) bilden,
wobei der Sitz (10) ferner mindestens einen sich selektiv erweiternden Abschnitt (80a, 80b) umfasst, wobei der erweiternde Abschnitt (80a, 80b) konfiguriert ist, um die Tischoberfläche (42) weiter zu erweitern,
wobei das Fahrzeug (100) ferner mindestens einen weiteren Sitz (10a, 10c) umfasst, wobei der weitere Sitz (10a, 10c) angrenzend an den Sitz (10) bereitgestellt ist, sodass der Sitz (10) und der weitere Sitz (10a, 10c) in einer Reihe angeordnet sind, **dadurch gekennzeichnet, dass** sich der erweiternde Abschnitt (80a, 80b) in ausgeklapptem Zustand hinter den weiteren Sitz (10a, 10c) erstreckt.

2. Fahrzeug (100) gemäß Anspruch 1, wobei der Sitzlehnenabschnitt (30) um einen Drehpunkt (22) des Sitzes (10) dreht und wenn der Sitzlehnenabschnitt (30) in der ersten Position ist, die hintere Oberfläche (31) des Sitzlehnenabschnitts (30) oberhalb des Drehpunkts (22) ist und der hervorstehende Abschnitt (40) unterhalb des Drehpunkts (22) ist.

3. Fahrzeug (100) gemäß Anspruch 1 oder 2, wobei der hervorstehende Abschnitt (40) starr an dem Sitzlehnenabschnitt (30) befestigt ist oder der hervorstehende Abschnitt (40) in den Sitzlehnenabschnitt (30) einziehbar ist.

4. Fahrzeug (100) gemäß einem der vorherigen Ansprüche, wobei der Sitzlehnenabschnitt (30) drehbar mit dem Sitzflächenabschnitt (20) gekoppelt ist.

5. Fahrzeug (100) gemäß einem der Ansprüche 1 bis 3, wobei der Sitz (10) ferner einen zwischenliegenden Sitzlehnenabschnitt (32) umfasst, der zwischen dem Sitzlehnenabschnitt (30) und dem Sitzflächenabschnitt (20) bereitgestellt ist, wobei der Sitzlehnenabschnitt (30) drehbar mit dem zwischenliegenden Sitzlehnenabschnitt (32) gekoppelt ist, und wobei der zwischenliegende Sitzlehnenabschnitt (32) drehbar mit dem Sitzflächenabschnitt (20) gekoppelt ist.

6. Fahrzeug (100) gemäß einem der vorherigen Ansprüche, wobei sich der oder jeder erweiternde Abschnitt (80a, 80b) selektiv von dem hervorstehenden Abschnitt (40) erstreckt.

7. Fahrzeug (100) gemäß einem der vorherigen Ansprüche, wobei sich der oder jeder erweiternde Abschnitt (80a, 80b) in Bezug auf den hervorstehenden Abschnitt (40) entfaltet.

8. Fahrzeug (100) gemäß einem der vorherigen Ansprüche, wobei der Sitz (10) ein Paar von erweiternden Abschnitten (80a, 80b) aufweist, die sich von dem hervorstehenden Abschnitt (40) erstrecken.

9. Fahrzeug (100) gemäß Anspruch 8, wobei sich das Paar von erweiternden Abschnitten (80a, 80b) von den jeweiligen Seitenrändern des hervorstehenden Abschnitts (40) erstreckt.

10. Fahrzeug (100) gemäß Anspruch 9, wobei das Paar von erweiternden Abschnitten (80a, 80b) um die jeweiligen Seitenränder des hervorstehenden Abschnitts (40) dreht und sich in Bezug auf den hervorstehenden Abschnitt (40) entfaltet.

11. Fahrzeug (100) gemäß einem der vorherigen Ansprüche, wobei der Sitz (10) ferner einen Kopfstützenabschnitt (50) umfasst, wobei der Kopfstützenabschnitt (50) konfiguriert ist, um eine Armaturenbrettstruktur (60) des Fahrzeugs (100) einzugreifen, wenn der Sitz (10) in der zweiten Position ist.

12. Fahrzeug (100) gemäß einem der vorherigen Ansprüche, wobei das Fahrzeug (100) ferner einen Rücksitz (70a, 70b, 70c) umfasst, der hinter dem Sitz (10) bereitgestellt ist, wobei die Tischfläche (42) für einen Insassen des Rücksitzes bereitgestellt ist.

## Revendications

1. Un véhicule (100) comprenant un siège, le siège (10, 10b) comprenant :
une partie de base de siège (20) ;
une partie de dossier de siège (30) pouvant tourner par rapport à la partie de base de siège (20) entre une première position, dans laquelle la partie de dossier de siège (30) est sensiblement verticale, et une deuxième position, dans laquelle une surface arrière (31) de la partie de dossier de siège (30) est sensiblement horizontale, et
une partie saillante (40) s'étendant depuis un bord de la partie de dossier de siège (30) qui se trouve à une extrémité inférieure de la partie de dossier de siège (30) lorsqu'elle est dans la première position, la partie saillante (40) ayant une surface (42) qui est contiguë à la surface arrière (31) de la partie de dossier de siège (30), dans laquelle la partie saillante (40) est configurée pour tourner avec la partie de dossier de siège (30) de sorte que dans la deuxième position, la partie saillante (40) s'étend vers l'arrière de la partie de base de siège (20) et la surface arrière (31) de la partie de dossier de siège (30) et la surface (42) de la partie saillante (40) forment ensemble une surface de table (42),
dans lequel le siège (10) comprend en outre au moins une partie d'extension sélective (80a, 80b), la partie d'extension (80a, 80b) étant configurée pour étendre davantage la surface de la table (42),
dans lequel le véhicule (100) comprend en outre au moins un autre siège (10a, 10c), l'autre siège (10a, 10c) étant prévu de manière adjacente au siège (10) de sorte que le siège (10) et l'autre siège (10a, 10c) sont en rangée, **caractérisé en ce que** la partie d'extension (80a, 80b), lorsqu'elle est déployée, s'étend derrière l'autre siège (10a, 10c).

2. Le véhicule (100) selon la revendication 1, dans lequel la partie de dossier de siège (30) tourne autour d'un point de pivotement (22) du siège (10) et lorsque la partie de dossier de siège (30) est dans la première position, la surface arrière (31) de la partie de dossier de siège (30) est au-dessus du point de pivotement (22) et la partie saillante (40) est en dessous du point de pivotement (22).

3. Le véhicule (100) selon la revendication 1 ou 2, dans lequel la partie saillante (40) est fixée de manière rigide à la partie de dossier de siège (30) ou la partie saillante (40) est rétractable dans la partie de dossier de siège (30).

4. Le véhicule (100) selon l'une quelconque des revendications précédentes, dans lequel la partie de dossier de siège (30) est couplée de manière rotative à la partie de base de siège (20).

5. Le véhicule (100) selon l'une quelconque des revendications 1 à 3, dans lequel le siège (10) comprend en outre une partie de dossier de siège intermédiaire (32) prévue entre la partie de dossier de siège (30) et la partie de base de siège (20), dans lequel la partie de dossier de siège (30) est couplée de manière rotative à la partie de dossier de siège intermédiaire (32), et dans lequel la partie de dossier de siège intermédiaire (32) est couplée de manière rotative à la partie de base de siège (20).

6. Le véhicule (100) selon l'une quelconque des revendications précédentes, dans lequel la ou chaque partie d'extension (80a, 80b) s'étend sélectivement depuis la partie saillante (40).

7. Le véhicule (100) selon l'une quelconque des revendications précédentes, dans lequel la ou chaque partie d'extension (80a, 80b) se déplie par rapport à la partie saillante (40).

8. Le véhicule (100) selon l'une quelconque des revendications précédentes, dans lequel le siège (10) comprend une paire de parties d'extension (80a, 80b) qui s'étendent depuis la partie saillante (40).

9. Le véhicule (100) selon la revendication 8, dans lequel la paire de parties d'extension (80a, 80b) s'étendent depuis des bords latéraux respectifs de la partie saillante (40).

10. Le véhicule (100) selon la revendication 9, dans lequel la paire de parties d'extension (80a, 80b) tourne autour des bords latéraux respectifs de la partie saillante (40) et se déplie par rapport à la partie saillante (40).

11. Le véhicule (100) selon l'une quelconque des revendications précédentes, dans lequel le siège (10) comprend en outre une partie d'appui-tête (50), la partie d'appui-tête (50) étant configurée pour engager une structure de tableau de bord (60) du véhicule (100) lorsque le siège (10) est dans la deuxième position.

12. Le véhicule (100) selon l'une quelconque des revendications précédentes, dans lequel le véhicule (100) comprend en outre un siège arrière (70a, 70b, 70c) prévu à l'arrière du siège (10), la surface de table (42) étant prévue pour un occupant du siège arrière.
